# EUROPEAN PATENT SPECIFICATION

(11) **EP 1 336 998 B1**
(45) Date of publication and mention of the grant of the patent: **02.03.2011**
(21) Application number: 01970301.6
(22) Date of filing: 28.09.2001
(51) Int. Cl.: H01M 4/96, H01M 8/02, H01M 4/88, H01M 12/06

(54) **ELECTROCHEMICAL DEVICE AND METHOD OF MANUFACTURING THE DEVICE**
ELEKTROCHEMISCHE EINRICHTUNG UND VERFAHREN ZU IHRER HERSTELLUNG
DISPOSITIF ELECTROCHIMIQUE ET SON PROCEDE DE FABRICATION

(30) Priority: 29.09.2000 JP 2000298902
(43) Date of publication of application: 20.08.2003
(73) Proprietor: Sony Corporation, Tokyo 141-0001 (JP)
(72) Inventor: YAMAURA, Kiyoshi, Shinagawa-ku, Tokyo 141-0001 (JP); IMAZATO, Minehisa, Shinagawa-ku, Tokyo 141-0001 (JP); KIHIRA, Toru, Shinagawa-ku, Tokyo 141-0001 (JP)
(74) Representative: Rupp, Christian
(86) International application number: PCT/JP2001/008600
(87) International publication number: WO 2002/027830

(56) References cited:
- JP-A- 3 074 056
- JP-A- 7 134 996
- JP-A- 7 326 363
- JP-A- 2000 136 493
- US-A- 3 979 227
- US-A- 5 750 013
- PICHUMANI J. BRITTO ET AL: "Improved Charge Transfer at Carbon Nanotube Electrodes" ADVANCED MATERIALS, vol. 11, no. 2, 1999, pages 154-157, XP002550492
- GUANGLI CHE ET AL.: 'Carbon nonotubule membranes for electrochemical energy storage and production' NATURE vol. 393, no. 6683, 28 May 1998, pages 346 - 349, XP000960755

## Description

### Technical Field

This invention relates to an electro-chemical device and a method for the preparation of an electro-chemical device having a high catalyst utilization efficiency, and a method for the preparation thereof.

### Background Art

Since the time of Industrial Revolution in the nineteenth century, fossil fuel, such as gasolene or light oil, has been used not only as an energy source for vehicles, but also as an energy source for power generation. Thanks to this utilization of the fossil fuel, the human being enjoyed the benefit of marked improvement in e.g., the level of living or industrial development. On the other hand, the earth is threatened by the risk of severe environmental destruction, while there is a fear of possibility of impending depletion of the fossil fuel, such that stable supply of fossil fuel over a long term is thought to be questionable.

Since hydrogen is contained in water and exists abundantly on the earth, while it has a large chemical energy contained per unit weight and, in use as an energy source, does not emit obnoxious gases or gases possibly contributing to global warming, it is recently stirring up notice as an energy source which is clean and moreover plentiful in supply.

In particular, researches in a fuel cell, capable of recovering an electrical energy form the hydrogen energy, are proceeding briskly, and expectations are being made for application thereof to large scale power generation or to on-site self-generation of power or as a power source for an electric vehicle.

An electrical energy generating device for taking out the electrical energy from the hydrogen energy, that is a fuel cell, has a hydrogen electrode, fed with hydrogen, and an oxygen electrode, fed with oxygen. Hydrogen fed to the hydrogen electrode is dissociated into a proton and electrons, by the catalytic action, with the electrons being collected by a current collector of the hydrogen electrode. The proton is transported towards the oxygen electrode. The electrons fed to the hydrogen electrode are transported through a load to the oxygen electrode. On the other hand, oxygen fed to the oxygen electrode is bound to the proton and to the electrons, transported from the hydrogen electrode, to generate water. In this manner, an electromotive force is produced between the hydrogen and oxygen electrodes to cause the current to flow in the load.

If, in the fuel cell for taking out the electrical energy from the hydrogen energy, an electromotive force is to be produced across the hydrogen and oxygen electrodes, hydrogen needs to be dissociated into the proton and electrons at the hydrogen electrode, while the proton, electrons and oxygen need to be reacted on the oxygen electrode to yield water. So, a catalyst layer for promoting dissociation of the proton and the electrons of hydrogen is needed in the hydrogen electrode, while a catalyst layer for promoting the linkage of the proton, electrons and oxygen is needed in the oxygen electrode.

These catalyst layers bring about the above-mentioned action by contacting with hydrogen on the side hydrogen electrode, and by contacting with oxygen on the side oxygen electrode. Thus, in order for the catalyst layers to operate effectively, the catalyst contained in the catalyst layer needs to contact efficiently with hydrogen or oxygen. That is, if the contact efficiency between the catalyst contained in the catalyst layer and hydrogen or oxygen is low, the catalytic action achieved is insufficient in comparison with the amount of the catalyst used, such that the energy generating efficiency is deteriorated.

This problem is raised not only in the hydrogen or oxygen electrode for a fuel cell but also in a gas diffusion electrode used in other electro-chemical devices, such as air cell.

### Disclosure of the Invention

It is therefore an object of the present invention to provide an electro-chemical device in which the catalyst and the feed gas may contact effectively with each other to elevate the energy efficiency, and a method for the preparation thereof.

In one aspect, the present invention provides an electro-chemical device having a high catalyst utilization efficiency including a gas diffusion electrode formed of a carbonaceous material and having a catalyst formed on at least a portion of the surface thereof, and an electrolyte film provided in contact with one surface of the gas diffusion electrode. The amount of the catalyst formed on the portion of the carbonaceous material contacting with the electrolyte film is lesser on the side electrolyte film than on the side opposite to the electrolyte film. So, the catalyst utilization efficiency is increased appreciably to render it possible to elevate the energy efficiency of the electro-chemical device.

The carbonaceous material is fiber-like carbon consisting of neddle-like graphite and carbon nano-tubes, which are entangled with each other and mixed according to a predetermined ratio.

According to the present invention, the amount of the catalyst deposited on the portion of the carbonaceous material contacting with the electrolyte film is smaller than that on the opposite side, so that the catalyst covered with the electrolyte film to a lesser extent to enable the catalyst to contact effectively with the electrolyte film. Thus, the electro-chemical device may be provided which is improved in energy efficiency.

In a preferred embodiment of the present invention, the electro-chemical device is a fuel cell, or an air cell.

In a further preferred embodiment of the present invention, the catalyst includes a material selected from the group consisting of platinum, platinum alloys, palladium, magnesium, titanium, manganese, lanthanum, vanadium, zirconium, nickel-lanthanum alloys, titanium-iron alloys, iridium, rhodium and gold.

In another aspect, the present invention provides a method for the preparation of an electro-chemical device including a sheet forming step of molding a sheet of a carbonaceous material, a catalyst forming step of forming a catalyst layer by a gas phase film-forming method on one surface of the sheet while shading the other surface of said sheet and a bonding step of bonding an electrolyte film on the opposite surface of the sheet.

The carbonaceaous material is fiber-like carbon, consisting of needle-like graphite and carbon nano-tubes, which are entangled with each other and mixed according to a predetermined ratio.

According to the present invention, in which a catalytic layer is formed by a gas phase film-forming method from one sheet surface, while an electrolyte film is bonded to the opposite sheet surface, the portion of the sheet contacting with the electrolyte film is lesser in the amount of the catalyst deposited thereon than the opposite side not contacting the electrolyte film, so that the amount of the catalyst covered by the electrolyte film can be diminished. This enables the catalyst and the feed gas to contact more effectively with each other to produce an electro-chemical device improved in energy efficiency.

In a preferred embodiment of the present invention, the sheet forming step introduces the fiber-like carbon into the liquid suspension for filtration thereof.

In a preferred embodiment of the present invention, the gas phase film forming method is the sputtering method, the vacuum deposition method, the pulse laser deposition method.

In a preferred embodiment of the present invention, there is further provided a step of forming a carbonaceous material on the one surface of the sheet after the catalyst forming step, by which it is possible to improve the mechanical strength of the sheet.

The other objects of the present invention and specific advantages provided by the present invention will be clarified further from the following description of embodiments.

### Brief Description of the Drawings

Fig.1 schematically shows a structure of a fuel cell according to a preferred embodiment of the present invention.
Fig.2 is a schematic cross-sectional view showing the interface between a proton conduction unit 3 and an oxygen electrode 1 or a hydrogen electrode 2.
Fig.3 schematically shows a structure of an air cell according to another preferred embodiment of the present invention.

### Best Mode for Carrying out the Invention

Referring to the drawings, preferred embodiments of the present invention will be explained in detail.

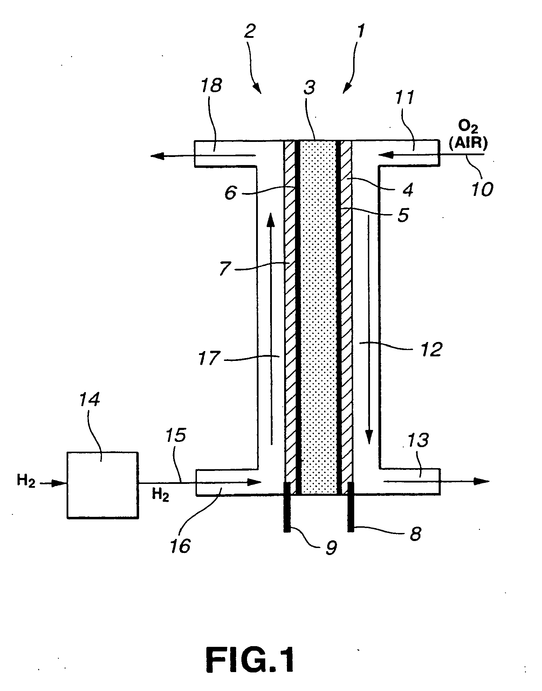

Referring to Fig.1, the fuel cell of the present embodiment includes an oxygen electrode 1, a hydrogen electrode 2 serving as a fuel electrode, and a proton conduction unit 3 serving as an electrolyte film sandwiched between the oxygen electrode 1 and the hydrogen electrode 2. The oxygen electrode 1 is formed by an electrode substrate 4, formed of a fiber-like carbon aggregate, and a catalytic layer 5 formed on its surface. Similarly, the hydrogen electrode 2 is formed by an electrode substrate 6, formed of a fiber-like carbon aggregate, and a catalytic layer 7 formed on its surface. The catalyst may be formed of a material exemplified by platinum, platinum alloys, palladium, magnesium, titanium, manganese, lanthanum, vanadium, zirconium, nickel-lanthanum alloys, titanium-iron alloys, iridium, rhodium and gold. Of these, platinum and platinum alloys are preferred.

Referring to Fig.1, a cathode lead 8 is derived from the electrode substrate 4 of the oxygen electrode 1, while an anode lead 9 is derived from the electrode substrate 6 of the hydrogen electrode 2. The cathode lead 8 and the anode lead 9 are connected to a load, not shown. On the side oxygen electrode 1, air 10 is supplied from an inlet 11 to a flow channel 12 so as to be discharged at an exit port 13, whereas, on the side hydrogen electrode 2, hydrogen 15 supplied from a hydrogen supply source 14 is supplied via an inlet 16 to a flow channel 17 so as to be discharged at an exit port 18.

Hydrogen 15 supplied from an inlet 16 to the flow channel 17 flows through the electrode substrate 6, formed of an aggregate of fiber-lime carbon, to reach a catalyst layer 7, formed on its surface, and is dissociated by the catalytic action into a proton and electrons. These electrons are migrated through the electrode substrate 6 towards the anode lead 9 so as to be supplied to the load, not shown, whilst the proton is migrated through the proton conduction unit 3 towards the oxygen electrode 1. On the other hand, oxygen 10 fed via inlet 11 to the flow channel 12 flows through the electrode substrate 4 formed of a fiber-like carbon aggregate to reach the catalytic layer 5 formed on its surface, and is bound, by the catalytic action, with the proton supplied from the proton conduction unit 3 and with the electrons supplied from the load via cathode lead 8, to yield water. This allows to take out the targeted electromotive force.

Meanwhile, the proton conduction unit 3 is a film that prevents permeation of hydrogen 15 and allows for transmission of the proton therethrough. Although there is no limitation to the material of the proton conduction unit 3, it is preferably based on a carbonaceous material, mainly composed of carbon, as a matrix, into which are introduced proton dissociating groups. The "proton dissociating groups" mean "functional groups from which a proton may be dissociated by electrical dissociation".

As the carbonaceous material, as a matrix of the proton conduction unit 3, any suitable material composed mainly of carbon may be used. It is however necessary that, following introduction of the proton dissociating groups, the ion conductivity be higher than electronic conductivity. The carbonaceous material, as the matrix material, may be enumerated by carbon clusters, as an aggregate of carbon atoms, and a carbonaceous material containing carbon tubes.

While there are a wide variety of carbon clusters, fullerenes, carbon clusters having fullerene structures exhibiting open ends at at least a portion thereof, or carbon clusters exhibiting diamond structures, are desirable. Of course, these are merely illustrative, such that any material exhibiting ionic conductivity higher than electronic conductivity following introduction of the proton dissociating groups may be used.

As the carbonaceous material, forming the matrix of the proton conduction unit 3, fullerene is most preferred. It is also preferred to use a material corresponding to fullerene, into which are introduced proton dissociating groups, such as -OH, -OSO₃H, -COOH, -SO₃H or -OPO(OH)₂ groups, as the material for the proton conduction unit 3.

As a material of the proton conduction unit 3, such a material different from the material having, as a matrix, the carbonaceous material mainly composed of carbon, such as, for example, perfluorosulfonic acid resin.

As the hydrogen supply source 14, a hydrogen tank, a hydrogen occlusive alloy or a carbonaceous hydrogen-occlusive material, may be used. The carbonaceous hydrogen-occlusive material may be enumerated by fullerene, carbon nano-fibers, carbon nano-tubes, carbon soot, nano-capsules, Bucky onion and carbon fibers.

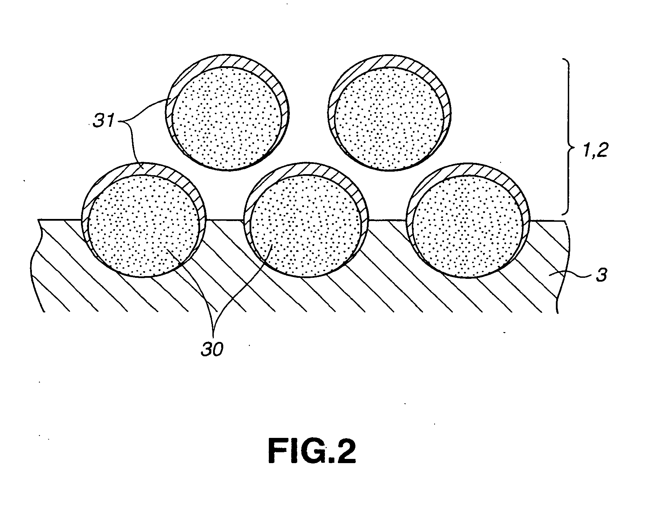

Fig.2 is a schematic cross-sectional view showing the interface between the proton conduction unit 3 and the oxygen electrode 1 or the hydrogen electrode 2.

Referring to Fig.2, the electrode substrates 4, 6, forming the oxygen electrode 1 or the hydrogen electrode 2, is made up of a plural number of fiber-like carbon 30, carrying a catalyst 31 on its surface. The fiber-like carbons 30 contacting the proton conduction unit 3 are partially embedded in the inside of the proton conduction unit 3. In the so embedded portions, the amount of the catalyst is lesser than that in the non-embedded portion. Although the catalyst 31 is preferably not formed in the embedded portions, it is practically difficult to eliminate the catalyst 31 completely from the embedded portions. It is therefore sufficient if the amount of the catalyst 31 be diminished in the embedded portion.

In the fuel cell of the present embodiment, the oxygen electrode 1 or the hydrogen electrode 2 is formed by a plural number of aggregates of fiber-like carbon 30, with the catalyst 31 being formed on their surfaces. On the other hand, since the amount of the catalyst 31 formed is smaller in the portions of the fiber-like carbon 30 covered by the proton conduction unit 3 than in the non-embedded portions, the catalyst utilization efficiency is that high. That is, the portions of the fiber-like carbon 30 not covered by the proton conduction unit 3 are not contacted with oxygen 10 nor with hydrogen 15, so that, if the catalyst 31 is formed on these portions, the role of the catalyst is not performed. In the fuel cell of the present embodiment, since the amount of the catalyst 31 formed is diminished, the utilization efficiency of the catalyst 31 is that high so that the fuel cell can be improved in energy generating efficiency.

The method for the preparation of the fuel cell of the present embodiment is now explained.

For preparing the oxygen electrode 1 and the hydrogen electrode 2, a filter having a preset surface area and a liquid suspension containing fiber-like carbon are provided. The fiber-like carbon consists of carbon nano-tubes and needle-like graphite. If carbon nano-tubes are selected as the fiber-like carbon, there is raised a difficulty that, even though the carbon nano-tubes are extremely fine fiber-like material and hence are liable to be entangled together, gas permeability is lowered due to high density of the carbon nano-tubes. If the needle-like graphite, which is in the form of fibers thicker than the carbon nano-tubes, is selected as the fiber-like carbon, there is raised a difficulty that the fibers are less liable to be entangled together, even though the gas permeability is sufficient. It is therefore desirable that the fiber-like carbon to be mixed into the liquid suspension be a mixture at a preset ratio of the carbon nano-tubes and the needle-like graphite.

The carbon nano-tubes are a tubular carbonaceous material having a diameter less than approximately a few nm, typically 1.2 to 1.7 nm, and may be of two known types, that is single-walled carbon nano-tubes, made up of a single-layer tube (SWCNT), and multi-walled carbon nano-tubes (MWCNT) having two or more concentric layers. There is no particular limitation to the length of the carbon nano-tubes, which may typically be a few µm. The carbon nano-fibers mean the carbon nano-tubes having a particularly large diameter, with the diameter being typically a few nm, with the giant carbon nano-fibers being of a diameter reaching 1 µm. In the following explanation, "carbon nano-tubes" are meant to include carbon nano-fibers.

Meanwhile, the carbon nano-tubes may be generated by an arc discharge method employing a graphite rod.

As for the filter, such a filter suffices which filters out a liquid suspension and allows to collect carbon nano-tubes and needle-like graphite. A filter formed by glass fibers is preferably employed. As the liquid suspension, a liquid mixture comprised of a mixed liquid of water, alcohols, such as methanol or ethanol, toluene, and a trace mount of sodium hydroxide added thereto, may be used. The role of sodium hydroxide is to prevent flocculation of carbon nano-tubes and the needle-like graphite.

Then, using the above filter, the liquid suspension is filtered. This deposits a mixture of the carbon nano-tubes and the needle-like graphite on the film surface. Since the carbon nano-tubes and the needle-like graphite are both of the fiber-like quality, the numerous carbon nano-tubes and the needle-like graphite become entangled together and unified on the fiber surface to form a sheet. In order to form the catalyst 31 effectively in a subsequent step, the sheet is desirably as thin in thickness as possible insofar as the mechanical strength of the sheet itself is thereby not lowered.

The aggregate of the sheet-like carbon nano-tubes and the needle-like graphite, thus formed on the filter surface, is peeled off from the filter surface and introduced into a sputtering chamber.

Then, in the sputtering chamber, the catalyst 31 is formed by the sputtering method on the aggregate of the sheet-like carbon nano-tubes. The catalyst may be formed of a material exemplified by platinum, platinum alloys, palladium, magnesium, titanium, manganese, lanthanum, vanadium, zirconium, nickel-lanthanum alloys, titanium-iron alloys, iridium, rhodium and gold. Of these, platinum and platinum alloys are preferred. With the use of the sputtering method, the catalyst 31 is formed only on the portion of the aggregate of the sheet-like carbon nano-tubes exposed to the target. That is, the portion of the aggregate of the sheet-like carbon nano-tubes lying in the "shade" of sputtering is not coated with the catalyst 31. Here, the surface of the sheet facing the target in sputtering and the sheet surface opposite thereto are termed a "front surface" and a "rear surface"of the sheet, respectively.

This sheet is then coated with the same proton conducting material as that used in the proton conduction unit 3. For example, if a material obtained on introducing a proton dissociating group -OH into fullerene (fullerenol) is used as the material of the proton conduction unit 3, it is this fullerenol that is coated on the sheet.

This completes the oxygen electrode land the hydrogen electrode 2.

The proton conduction unit 3 is sandwiched by the back surfaces of the oxygen electrode 1 and the hydrogen electrode 2, and an inlet 11, a flow channel 12 and an outlet 13 for air 10 are formed in the side oxygen electrode 1, while an inlet 16, a flow channel 17 and an outlet 18 for hydrogen 15 are formed in the side hydrogen electrode 2. This completes the fuel cell of the present embodiment.

With the method of the present embodiment, in which the catalyst 31 is sputtered from the sheet surface, the catalyst 31 is substantially not deposited on the back surface of the sheet. Thus, if the oxygen electrode 1 and the hydrogen electrode 2 are each formed by this sheet and the proton conduction unit 3 is sandwiched by the reverse sides of these sheets to form the fuel cell, it is possible to reduce the amount of the catalyst 31 in the portion of the aggregate of fiber-like carbon 30 forming the oxygen electrode 1 and the hydrogen electrode 2 that is covered by the proton conduction unit 3. This allows to raise the utilization efficiency of the catalyst 31 and hence the energy producing efficiency of the fuel cell related to the amount of the catalyst 31 used.

A further preferred embodiment of the present invention is hereinafter explained.

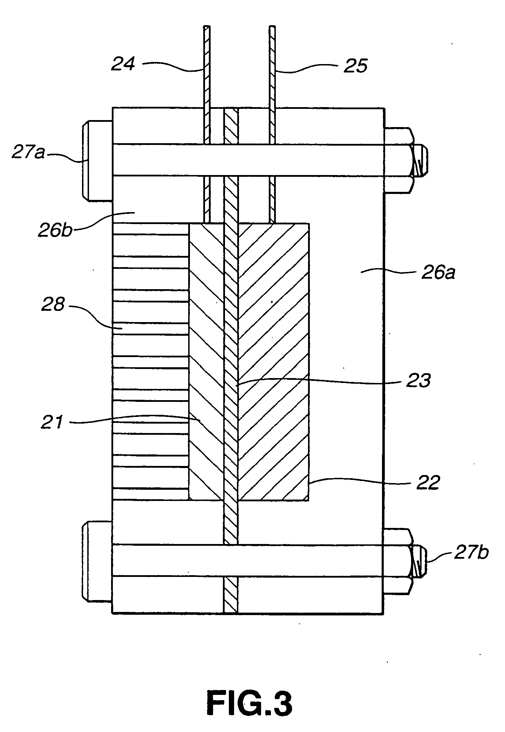

Fig.3 shows a schematic structure of an air cell according to ta further preferred embodiment of the present invention.

Referring to Fig.3, the air cell of the present embodiment (air- zinc cell) includes an air electrode 21, an anode 22 and an electrolyte 23 sandwiched between the air electrode 21 and the anode 22. The air electrode 21 is formed by an electrode substrate, formed by an aggregates of fiber-like carbon and a catalytic layer formed on its surface. The anode 22 is formed by a zinc sheet 100 µm in thickness. A cathode lead 24 is derived from the electrode substrate of the air electrode 21, whilst an anode lead 25 is derived from the anode 22, these leads 24, 25 being connected to a load, not shown. The air electrode 21, anode 22 and the electrolyte 23 sandwiched therebetween are sandwiched by Teflon sheets 26a, 26b, 3 mm in thickness, with the Teflon sheets 26a, 26b being secured together with bolts 27a, 27b. Plural air openings 28 are formed in the Teflon sheet 26b for supplying air to the air electrode 21. The air openings 28 are 1.5 mm in diameter.

The air cell of the aforementioned structure may be prepared as follows:

A catalytic layer is formed by any of the above-described methods on the surface of the aggregates of fiber-like carbon to form the air electrode 21. The reverse surface of the air electrode 21 is coated with a gelated aqueous solution of zinc chloride, as an electrolyte 23, to a thickness of approximately 50 µm, and the anode 22 is bonded in position. Using the Teflon sheets 26a, 26b, both sides of the resulting unit are tightly clamped together and made fast with the bolts 27a, 27b.

This completes the air cell.

With the air cell, manufactured as described above, the reaction proceeds in the air electrode 21 and in the anode 22 by the reaction are indicated respectively by the formula (1) and by the formula (2):

O₂ + 2H₂O + 4e⁻ → 4OH⁻ ··(1)

Zn + 20H⁻ → Zn(OH)₂ + 2e⁻ ···(2)

Thus, the reaction indicated by the formula (3)on the whole to produce the targeted electromotive force.:

1/2O₂ + Zn + H₂O → Zn(OH)₂ ···(3)

In the air cell of the present embodiment, the amount of the catalyst formed is smaller in the portion of the fiber-like carbon covered by the electrolyte 23 than in the portion thereof not covered in this manner, thus improving the catalyst utilization efficiency significantly. The result is that the air cell of the present embodiment can be improved in energy efficiency.

The present invention is not to be limited to the embodiments, as now explained, but may be suitably modified without departing from its scope.

For example, in the above-described embodiments, the sputtering method is used as a method for forming the catalyst on the surface of the sheet-like aggregate of fiber-like carbon. However, the method of forming the catalyst on the surface of the sheet-like aggregate of fiber-like carbon is not limited to the sputtering method, but other methods, such as the gas-phase film-forming methods, e.g., a vacuum vapor deposition method or a pulse laser deposition method, may also be used.

In the above-described embodiments, the sheet of the aggregates of fiber-like carbon, carrying the catalyst, is directly used as the oxygen electrode 1 and the hydrogen electrode 2. Alternatively, a carbon sheet may be bonded to the sheet surface to form the oxygen electrode 1 or the hydrogen electrode 2. Since the sheet of the aggregates of fiber-like carbon 30 is desirably as thin in thickness as possible, as described above, it may be feared that the physical strength of the sheet falls short. If a carbon sheet is bonded on the sheet surface, it may be possible to increase its strength. If the catalyst 31 is formed on the surface of the sheet of the aggregate of fiber-like carbon 30 by sputtering and filtration is then carried out using a liquid suspension containing the fiber-like carbon 30, the aggregates of fiber-like carbon 30 may be further deposited on the sheet surface to form the oxygen electrode 1 and the hydrogen electrode 2.

Moreover, in the above-described embodiments, the hydrogen gas is used as the fuel gas of the fuel cell. However, as the fuel gas, gases obtained on vaporizing methanol, for example, may be used in place of the hydrogen gas. In this case, the reaction indicated by the formula (4):

CH₃OH + H₂O → CO₂ + 6H⁺ + 6e- ···(4)

and the reaction indicated by the formula (5):

6H⁺ + 3/2O₂ + 6e⁻ → 3H₂O ···(5)

proceed in the anode fed with the gas obtained on vaporizing methanol and in the oxygen electrode 1 (cathode) fed with air, respectively, so that, on the whole, the reaction indicated by the formula (6):

CH₃OH + 3/2O₂ → CO₂ + 2H₂O ···(6)

proceeds to produce the targeted electromotive force.

It should be noted that, if the gas obtained on vaporizing methanol as the fuel gas, carbon dioxide is also yielded in addition to water.

### Industrial Applicability

As described above, according to the present invention, in which the gas diffusion electrode is formed by a plural number of aggregates of fiber-like carbon, and the portion of the fiber-like carbon covered by the electrolyte film is covered with the catalyst in a lesser amount than the exposed portion of the fiber-like carbon, the catalyst utilization efficiency may be improved appreciably to improve the energy efficiency of the electro-chemical device.

## Claims

1. An electro-chemical device comprising:
a gas diffusion electrode (1, 2) formed of a carbonaceous material (30) and having a catalyst (31) formed on at least a portion of a surface thereof, and
an electrolyte film (3) provided in contact with one surface of said gas diffusion electrode (1, 2); wherein
an amount of the catalyst (31) formed on the portion of said carbonaceous (30) material contacting with said electrolyte film (3) is lesser on the side of the electrolyte film(3) than on the side opposite to the electrolyte film (3),
**characterized in that** the carbonaceous material (30) is fiber-like carbon, consisting of needle-like graphite and carbon nano-tubes, which are entangled with each other and mixed according to a predetermined ratio.

2. The electro-chemical device according to claim 1 wherein the device is a fuel cell.

3. The electro-chemical device according to claim 1 wherein the device is an air cell.

4. The electro-chemical device according to claim 1 wherein the needle-like graphite has a diameter of up to 1 µm.

5. The electro-chemical device according to claim 1 wherein the carbon nano-tubes have a diameter in a range of 1.2 to 1.7 nm.

6. The electro-chemical device according to claim 1 wherein said catalyst (31) is composed of a material selected from the group consisting of platinum, platinum alloys, palladium, magnesium, titanium, manganese, lanthanum, vanadium, zirconium, nickel-lanthanum alloys, titanium-iron alloys, iridium, rhodium and gold.

7. A method for preparing an electro-chemical device comprising:
a sheet forming step of molding a sheet of a carbonaceous material (30);
a catalyst forming step of forming a catalyst layer (31) by a gas phase film-forming method on one surface of said sheet, while shading the other surface of said sheet; and
a bonding step of bonding an electrolyte film (3) on the opposite surface of said sheet,
**characterized in that** the carbonaceous material (30) is fiber-like carbon, consisting of needle-like graphite and carbon nano-tubes, which are entangled with each other and mixed according to a predetermined ratio.

8. The method for preparing the electro-chemical device according to claim 7 wherein the needle-like graphite has a diameter of up to 1 µm.

9. The method for preparing the electro-chemical device according to claim 7 wherein the carbon nano-tubes have a diameter in a range of 1.2 to 1.7 nm.

10. The method for the preparing the electro-chemical device according to claim 7 wherein said sheet molding step comprises a step of introducing said fiber-like carbon into a liquid suspension so as to filter said fiber-like carbon.

11. The method for preparing the electro-chemical device according to claim 7 wherein said gas phase film-forming method is a sputtering method.

12. The method for preparing the electro-chemical device according to claim 7 wherein said gas phase film-forming method is a vacuum vapor deposition method.

13. The method for preparing the electro-chemical device according to claim 7 wherein said gas phase film-forming method is a pulse laser deposition method.

14. The method for preparing the electro-chemical device according to claim 7 further comprising a step of forming the carbonaceous material (30) on said one surface of said sheet after said catalyst forming step.

## Patentansprüche

1. Elektrochemische Vorrichtung aufweisend:
eine Gasdiffusionselektrode (1, 2), die aus einem kohlenstoffhaltigen Material (30) gebildet ist und einen Katalysator (31) aufweist, der auf wenigstens einem Teil deren Oberfläche gebildet ist, und
einen Elektrolytfilm (3), der in Kontakt mit einer Oberfläche der Gasdiffusionselektrode (1, 2) angeordnet ist; wobei
eine Menge des Katalysators (31), der auf dem Teil des kohlenstoffhaltigen Materials (30) gebildet ist, der mit dem Elektrolytfilm (3) in Kontakt ist, auf der Seite des Elektrolytfilms (3) weniger ist, als auf der gegenüberliegenden Seite des Elektrolytfilms (3),
**dadurch gekennzeichnet, dass** das kohlenstoffhaltige Material (30) faserartiger Kohlenstoff ist, bestehend aus nadelartigem Graphit und Kohlenstoffnanoröhrchen, die miteinander verwickelt sind und gemäß einem vorbestimmten Verhältnis gemischt sind.

2. Elektrochemische Vorrichtung gemäß Anspruch 1, wobei die Vorrichtung eine Brennstoffzelle ist.

3. Elektrochemische Vorrichtung gemäß Anspruch 1, wobei die Vorrichtung eine Luftzelle ist.

4. Elektrochemische Vorrichtung gemäß Anspruch 1, wobei das nadelartige Graphit einen Durchmesser von bis zu 1 µm aufweist.

5. Elektrochemische Vorrichtung gemäß Anspruch 1, wobei die Kohlenstoffnanoröhrchen einen Durchmesser in einem Bereich von 1,2 bis 1,7 nm aufweisen.

6. Elektrochemische Vorrichtung gemäß Anspruch 1, wobei der Katalysator (31) aus einem Material zusammengesetzt ist, das aus der Gruppe ausgewählt ist, die aus Platin, Platinlegierungen, Palladium, Magnesium, Titan, Mangan, Lanthan, Vanadium, Zirkonium, Nickel-Lanthan-Legierungen, Titan-Eisen-Legierungen, Iridium, Rhodium und Gold besteht.

7. Verfahren zum Herstellen einer elektrochemischen Vorrichtung aufweisend:
einen Schichtbildungsschritt des Formens einer Schicht aus einem kohlenstoffhaltigen Material (30);
einen Katalysatorbildungsschritt des Bildens einer Katalysatorschicht (31) durch ein Gasphasen-Filmbildungsverfahren auf einer Oberfläche der Schicht, während die andere Oberfläche der Schicht abgeschattet wird; und
einen Bindeschritt des Bindens eines Elektrolytfilms (3) auf der gegenüberliegenden Seite der Schicht,
**dadurch gekennzeichnet, dass** das kohlenstoffhaltigen Material (30) faserartiger Kohlenstoff ist, der aus nadelartigem Graphit und Kohlenstoffnanoröhrchen besteht, die miteinander verwickelt sind und gemäß einem vorbestimmten Verhältnis gemischt sind.

8. Verfahren zum Herstellen der elektrochemischen Vorrichtung gemäß Anspruch 7, wobei das nadelartige Graphit einen Durchmesser von bis zu 1 µm aufweist.

9. Verfahren zum Herstellen einer elektrochemischen Vorrichtung gemäß Anspruch 7, wobei die Kohlenstoffnanoröhrchen einen Durchmesser in einem Bereich von 1,2 bis 1,7 nm aufweisen.

10. Verfahren zum Herstellen der elektrochemischen Vorrichtung gemäß Anspruch 7, wobei der Schichtbildungsschritt einen Schritt des Einbringens des faserartigen Kohlenstoffs in eine flüssige Suspension aufweist, um den faserartigen Kohlenstoff zu filtern.

11. Verfahren zum Herstellen der elektrochemischen Vorrichtung gemäß Anspruch 7, wobei das Gasphasen-Filmbildungsverfahren ein Sputter-Verfahren ist.

12. Verfahren zum Herstellen der elektrochemischen Vorrichtung gemäß Anspruch 7, wobei das Gasphasen-Filmbildungsverfahren ein Vakuum-Bedampfungsverfahren ist.

13. Verfahren zum Herstellen der elektrochemischen Vorrichtung gemäß Anspruch 7, wobei das Gasphasen-Filmbildungsverfahren ein Pulslaser-Abscheidungsverfahren ist.

14. Verfahren zum Herstellen der elektrochemischen Vorrichtung gemäß Anspruch 7, das ferner einen Schritt des Bildens des kohlenstoffhaltigen Materials (30) auf der einen Oberfläche der Schicht nach dem Katalysatorbildungsschritt aufweist.

## Revendications

1. Dispositif électrochimique comprenant :
une électrode de diffusion de gaz (1, 2) formée d'un matériau carboné (30) et ayant un catalyseur (31) formé sur au moins une partie d'une surface de celle-ci, et
un film d'électrolyte (3) disposé en contact avec une surface de ladite électrode de diffusion de gaz (1, 2);
dans lequel
la quantité du catalyseur (31) formé sur la partie dudit matériau carboné (30) en contact avec ledit film d'électrolyte (3) est plus faible sur le côté du film d'électrolyte (3) que sur le côté opposé du film d'électrolyte (3),
**caractérisé en ce que** le matériau carboné (30) est du carbone de type fibreux, constitué de graphite aciculaire et de nanotubes de carbone, qui sont enchevêtrés les uns avec les autres et mélangés conformément à un rapport prédéterminé.

2. Dispositif électrochimique selon la revendication 1, lequel dispositif est une pile à combustible.

3. Dispositif électrochimique selon la revendication 1, lequel dispositif est une pile à air.

4. Dispositif électrochimique selon la revendication 1, dans lequel le graphite aciculaire a un diamètre allant jusqu'à 1 µm.

5. Dispositif électrochimique selon la revendication 1, dans lequel les nanotubes de carbone ont un diamètre situé dans la plage allant de 1,2 à 1,7 nm.

6. Dispositif électrochimique selon la revendication 1, dans lequel ledit catalyseur (31) est composé d'un matériau choisi dans le groupe constitué par le platine, les alliages de platine, le palladium, le magnésium, le titane, le manganèse, le lanthane, le vanadium, le zirconium, les alliages de nickel-lanthane, les alliages de titane-fer, l'iridium, le rhodium et l'or.

7. Procédé pour préparer un dispositif électrochimique comprenant :
une étape de formation de feuille consistant à mouler une feuille d'un matériau carboné (30) ;
une étape de formation de catalyseur consistant à former une couche de catalyseur (31) au moyen d'un procédé de formation de film en phase gazeuse sur une surface de ladite feuille, cependant que l'autre surface de ladite feuille est abritée ; et
une étape de collage consistant à coller un film d'électrolyte (3) sur la surface opposée de ladite feuille,
**caractérisé en ce que** le matériau carboné (30) est du carbone de type fibreux, constitué de graphite aciculaire et de nanotubes de carbone, qui sont enchevêtrés les uns avec les autres et mélangés conformément à un rapport prédéterminé.

8. Procédé pour préparer le dispositif électrochimique selon la revendication 7, dans lequel le graphite aciculaire a un diamètre allant jusqu'à 1 µm.

9. Procédé pour préparer le dispositif électrochimique selon la revendication 7, dans lequel les nanotubes de carbone ont un diamètre situé dans la plage allant de 1,2 à 1,7 nm.

10. Procédé pour préparer le dispositif électrochimique selon la revendication 7, dans lequel ladite étape de moulage de feuille comprend une étape consistant à introduire ledit carbone fibreux dans une suspension liquide de façon à filtrer ledit carbone fibreux.

11. Procédé pour préparer le dispositif électrochimique selon la revendication 7, dans lequel ledit procédé de formation de film en phase gazeuse est un procédé de pulvérisation cathodique.

12. Procédé pour préparer le dispositif électrochimique selon la revendication 7, dans lequel ledit procédé de formation de film en phase gazeuse est un procédé de déposition de vapeur sous vide.

13. Procédé pour préparer le dispositif électrochimique selon la revendication 7, dans lequel ledit procédé de formation de film en phase gazeuse est un procédé de déposition à laser pulsé.

14. Procédé pour préparer le dispositif électrochimique selon la revendication 7, comprenant en outre une étape consistant à former le matériau carboné (30) sur ladite une surface de ladite feuille après ladite étape de formation de catalyseur.
